# EUROPEAN PATENT APPLICATION

(11) **EP 3 249 530 A1**
(43) Date of publication of application: **29.11.2017**
(21) Application number: 15878789.5
(22) Date of filing: 22.01.2015
(51) Int. Cl.: G06F 9/54, G06F 3/048, G06F 9/445

(54) **APPLICATION FUNCTION EXPANSION METHOD, APPLICATION FUNCTION EXPANSION PROGRAM, AND APPLICATION FUNCTION EXPANSION DEVICE**

(71) Applicant: Fujitsu Limited, Kawasaki-shi, Kanagawa 211-8588 (JP)
(72) Inventor: NAKAMURA, Yosuke, Kawasaki-shi Kanagawa 211-8588 (JP); KANI, Junya, Kawasaki-shi Kanagawa 211-8588 (JP); SAKAMOTO, Takuya, Kawasaki-shi Kanagawa 211-8588 (JP); YASAKI, Koichi, Kawasaki-shi Kanagawa 211-8588 (JP); ITO, Hidenobu, Kawasaki-shi Kanagawa 211-8588 (JP); NIMURA, Kazuaki, Kawasaki-shi Kanagawa 211-8588 (JP)
(74) Representative: Haseltine Lake LLP
(86) International application number: PCT/JP2015/051736
(87) International publication number: WO 2016/117096

(57) **Abstract**

An application functionality extension method includes, identifying, by a computer installed in a terminal, a position where a predetermined tag corresponding to a device detected by the terminal is included from an application included in the terminal; and inserting, by the computer, logic for utilizing the device corresponding to the predetermined tag at the identified position of the application.

## Description

### FIELD

Technology disclosed herein relates to an application functionality extension method, an application functionality extension program, and an application functionality extension apparatus.

### BACKGROUND

In recent years, as portable information terminals such as smartphones and tablet terminals are given higher performance, there are increasingly more opportunities for portable information terminals to execute some of the information processing that had been assigned to personal computers until now. In many cases, an application executed by a portable information terminal is a web (world wide web) application (referred to as "applications" hereafter) that processes information in coordination with a server or the like connected via a communication line such as the internet. Modes of information processing suited to applications that employ a network are therefore being investigated.

### Related Documents

### Related Patent Documents

Patent Document 1: Japanese Patent Application Laid-open (JP-A) No. 2005-50241
Patent Document 2: Japanese Patent Application Laid-open (JP-A) No. 2013-81127
Patent Document 3: Japanese Patent Application Laid-open (JP-A) No. 2013-235387

When an application is executed by a portable information terminal, the user may desire to output the information handled by the application to peripheral devices connected to the portable information terminal (referred to as "devices" hereafter) such as a printer, external speaker, external monitor, or the like.

However, the devices will be unusable from the portable information terminal if code (logic) for controlling the devices is not included in the application, even if, for example, drivers corresponding to the devices are installed in the portable information terminal.

Further, since the application needs to be modified to add logic to the application, users of the portable information terminal lacking specialist knowledge of the application may find it difficult to modified the application in many cases.

### SUMMARY

An object of one aspect of technology disclosed herein is to extend the functionality of an application such that a device may be utilized from the application without upgrading the application, even in cases in which the application does not take coordination with the device into consideration.

In one aspect, a computer identifies a position where a predetermined tag corresponding to a device detected by a terminal is included from an application included in the terminal. The computer then inserts logic for utilizing the device corresponding to the predetermined tag at the identified position of the application.

### Effects of Invention

One aspect of technology disclosed herein has an effect of enabling the functionality of an application to be extended such that a device may be utilized from the application without upgrading the application, even in cases in which the application does not take coordination with the device into consideration.

### BRIEF DESCRIPTION OF DRAWINGS

Fig. 1 is a diagram illustrating a configuration example of a web system according to a first exemplary embodiment and a second exemplary embodiment.
Fig. 2 is a diagram illustrating an example of a data structure of a compatible device DB.
Fig. 3 is a diagram illustrating an example of device control logic.
Fig. 4 is a diagram illustrating an example of a data structure of a device control logic list database (DB).
Fig. 5 is a diagram illustrating an example of a data structure of a driver database (DB).
Fig. 6 is a diagram illustrating a configuration example in a case in which a terminal according to the first exemplary embodiment or the second exemplary embodiment is implemented by a computer.
Fig. 7 is a flowchart illustrating an example of a flow of application functionality extension processing according to the first exemplary embodiment.
Fig. 8 is a diagram illustrating an example of a terminal prior to insertion of logic for a printer into an application.
Fig. 9 illustrates an example of the terminal after inserting the logic for a printer into the application.
Fig. 10 is a diagram illustrating an example of a terminal before inserting logic for an external speaker into an application.
Fig. 11 is a diagram illustrating an example of the terminal after inserting the logic for an external speaker into the application.
Fig. 12 is a diagram illustrating an example of a terminal before inserting logic for an external monitor into an application.
Fig. 13 is a diagram illustrating an example of the terminal after inserting the logic for an external monitor into the application.
Fig. 14 is a diagram illustrating an example of device control logic.
Fig. 15 is a diagram illustrating an example of a cross-site request.
Fig. 16 is a diagram illustrating an example of a cross-site request with CORS applied.
Fig. 17 is a flowchart illustrating an example of a flow of application functionality extension processing according to the second exemplary embodiment.
Fig. 18 is a diagram illustrating an example of a device selection screen.
Fig. 19 is a diagram illustrating an example of a screen for instructing coordination with a selected device.
Fig. 20 is a diagram illustrating a configuration example of a web system according to a third exemplary embodiment.
Fig. 21 is a diagram illustrating a configuration example in a case in which a terminal according to the third exemplary embodiment is implemented by a computer.
Fig. 22 is a flowchart illustrating an example of a flow of application functionality extension processing according to the third exemplary embodiment.
Fig. 23 is a diagram illustrating an example of display in a case in which a device that may be utilized by a terminal has been detected.
Fig. 24 is a diagram illustrating an example of display in a case in which an application is coordinating with a device.
Fig. 25 is a schematic diagram for explaining sharing of drivers between applications.
Fig. 26 is a diagram illustrating an example of logic.

### DESCRIPTION OF EMBODIMENTS

Detailed description of exemplary embodiments of technology disclosed herein follow, with reference to the drawings. Note that components and processing that effect the same functionality are allocated the same reference numerals in all of the figures, and duplication description thereof may be omitted.

### First Exemplary Embodiment

In order to use devices from an application of a portable information terminal (referred to as a terminal hereafter), a driver for the device to be used needs to be installed on the terminal. The driver includes a group of functions for directly controlling the device, and the application utilizes the device corresponding to the driver by calling the group of functions included in the driver. A developer of the application may thereby use the device by utilizing the device via the group of functions of the driver, with detailed control procedures for the device being entrusted to the group of functions of the driver. Accordingly, the developer of the application may shorten the development time of the application compared to cases in which code corresponding to the group of functions of the driver is written by the developer.

The driver is provided independently from the application, from the developer of the device, for example. Accordingly, the driver may be installed in the terminal at a different timing from the application. Further, the same device may be utilized by plural applications in cases in which code for utilizing a predefined group of functions of the driver to control the device, namely, logic, is described in the applications.

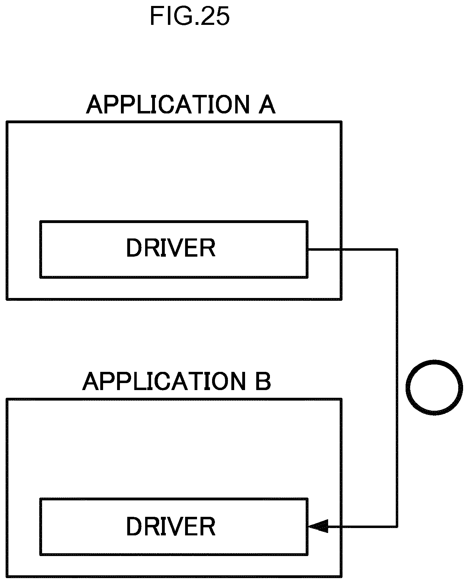

Fig. 25 is a diagram illustrating a state in which the same driver is utilized by plural applications. As illustrated in Fig. 25, a driver utilized by an application A may also be utilized by an application B since the driver exists separately from the application A. Accordingly, the device corresponding to the driver may be shared between the application A and the application B by describing logic for utilizing the driver.

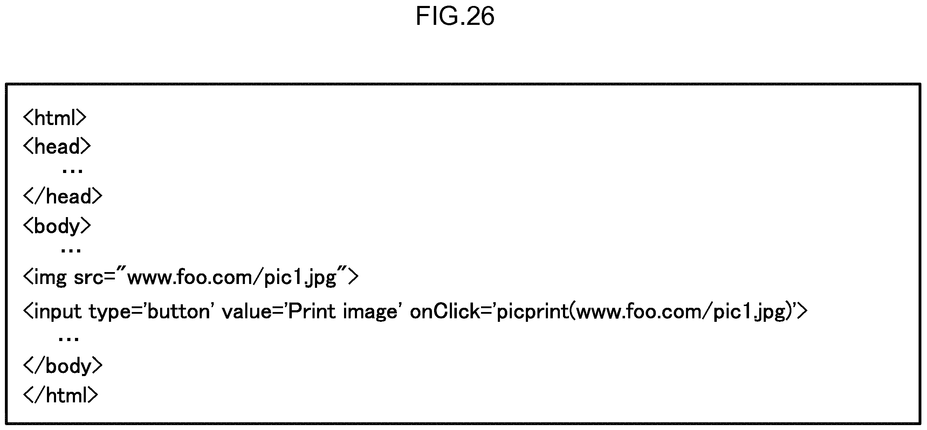

Fig. 26 is a diagram illustrating an example of logic in an application. As illustrated in Fig. 26, the application is, for example, described using a markup language such as hypertext markup language (HTML). Note that the description language of the application illustrated in Fig. 26 is an example. The description language of the application may be, for example, a meta-language such as XML, a scripting language, or any language that is a language that the execution unit (for example, a browser) executing the application in accordance with the description content of the application may interpret.

In the example of Fig. 26, a line corresponding to an input tag represented by "<input ...>" corresponds to the logic. For example, the user calls a picprint function of the driver by pressing a button labeled "print image" displayed on a screen of the terminal, and an image of an image file represented by "www.foo.com/pic1.jpg" is output from a printer corresponding to a driver that includes the picprint function.

In this way, in cases in which a printer is utilized from an application in this manner, for example, logic for outputting an image from the printer needs to be pre-included in the application. However, amongst applications, there are also applications that, for example, simply display an image on the screen of the terminal and have not initially envisage the use of a device such as a printer. In order to use devices by applications that have not envisage the use of the device, the code of the application needs to be modified and logic corresponding to the device needs to be added to the application. However, a user of the terminal having no deep understanding of the application will usually find it difficult to add logic corresponding to the device to the application.

Described below is an example of extending functionality of an application so that the application is able to utilize a device without updating the application, even in cases in which the application includes no such logic.

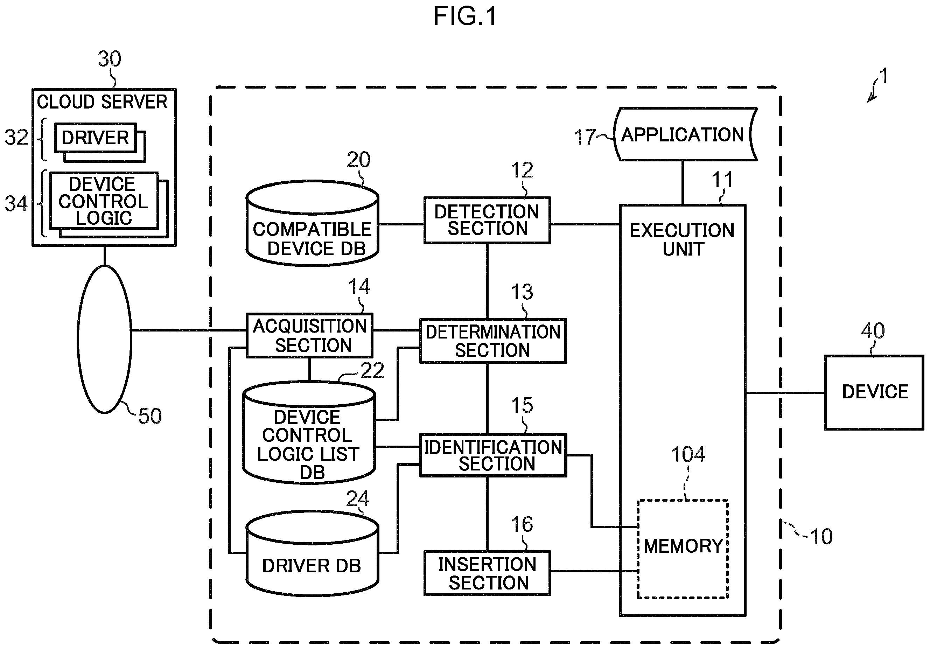

Fig. 1 is a diagram illustrating a configuration example of a web system 1 according to the first exemplary embodiment.

As illustrated in Fig. 1, the web system 1 includes, for example, a terminal 10, a cloud server 30, a device 40, and a communication line 50. The terminal 10 and the cloud server 30 are, for example, connected to the communication line 50, which is, for example, an internet line. The terminal 10 and the cloud server 30 exchange data via the communication line 50. Further, the terminal 10 and the device 40 are also connected to each other, and data is exchanged between the terminal 10 and the device 40.

Note that the type of the communication line 50 is not limited and may, for example, be a line other than an internet line, such as an intranet line or a dedicated line, and in addition, may be wired, wireless, or any connection mode that mixes wired and wireless connections. Further, the connection mode for connecting the terminal 10 and the device 40 may also be wired, wireless, or any connection mode that mixes wired and wireless connections.

The terminal 10 includes, for example, an execution unit 11, a detection section 12, a determination section 13, an acquisition section 14, an identification section 15, and an insertion section 16 as functional sections. The terminal 10 further includes, for example, a compatible device database (DB) 20, a device control logic list DB 22, and a driver DB as databases, and, for example, includes an application 17 acquired from a server connected to the communication line 50 such as the cloud server 30.

The execution unit 11 loads the code of the application 17 into memory 104, reads the application 17 loaded to the memory 104 one line at a time, and executes the application 17 while interpreting the described contents of the read line. Note that the execution unit 11 makes a call to the detection section 12 when the application 17 is executed.

The detection section 12 detects the device 40, which is capable of connecting to the terminal 10 when called from the execution unit 11, and references the compatible device DB 20 to detect whether the detected device 40 is compatible with the terminal 10, namely, whether or not the detected device 40 may be utilized by the terminal 10.

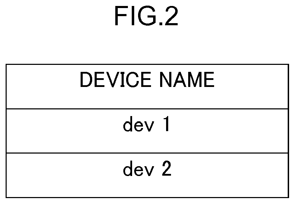

Fig. 2 is a diagram illustrating an example of a data structure in the compatible device DB 20. The compatible device DB 20 includes, for example, information (compatible device information) listing the names of devices compatible with the terminal 10. The detection section 12 determines that the detected device 40 is compatible with the terminal 10 if the device name of the detected device 40 is included in the compatible device information. Note that the device names included in the compatible device information are not duplicated, and the device 40 may be uniquely identified from the device name.

The detection section 12 outputs the device name of the detected device 40 to the determination section 13 in cases in which a device 40 compatible with the terminal 10 has been detected.

The determination section 13 references the device control logic list DB 22 and determines whether or not device control logic 34 corresponding to the device name received from the detection section 12 is already present in the terminal 10.

Here, device control logic 34 is information that includes information (logic correspondence information) associating code for controlling the device 40, namely, logic, with a tag indicating an insertion position of the logic in the application 17.

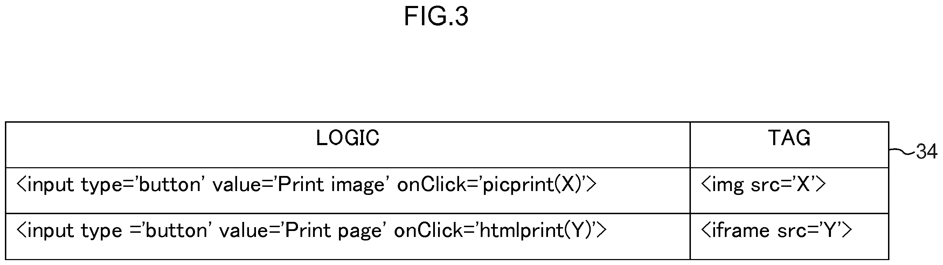

Fig. 3 illustrates an example of the device control logic 34. The device control logic 34 illustrated in Fig. 3 associates the logic for utilizing the device 40 from the application 17 by calling the group of functions of a driver 32, with a tag along the row direction.

Note that in the device control logic 34 illustrated in Fig. 3, labels 'X' and 'Y' represent file names of resources to be output to the device 40. Further, although two items of the logic correspondence information are included in the device control logic 34 illustrated in Fig. 3, the number of items of the logic correspondence information included in the device control logic 34 is not limited. Further, although the logic of the device control logic 34 illustrated in Fig. 3 is described by HTML language, another language may be utilized, and information designating a uniform resource locator (URL) of a file that specifies the logic may be utilized.

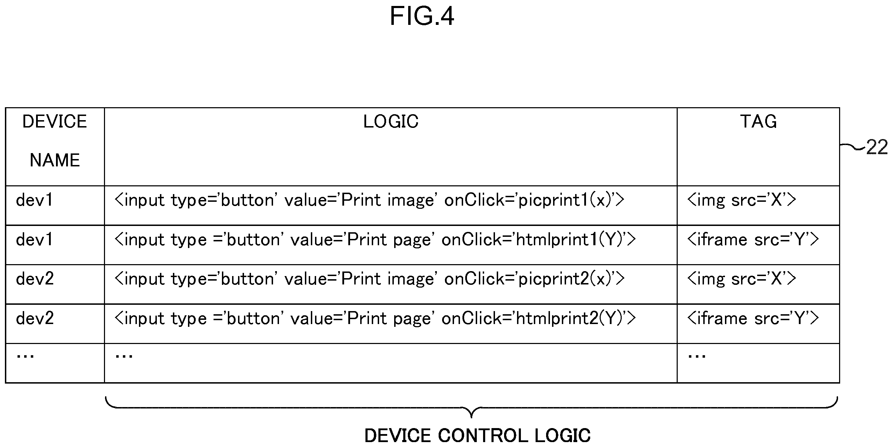

Fig. 4 is a diagram illustrating an example of a data structure of the device control logic list DB 22. The device control logic list DB 22, for example, associates each device name with device control logic 34 corresponding to the device name. The determination section 13 determines that device control logic 34 corresponding to the device name input from the detection section 12 is present in the terminal 10 in cases in which the device name input from the detection section 12 is included in the device name column of the device control logic list DB 22. The determination section 13 then outputs, to the identification section 15, the device name input from the detection section 12.

However, the determination section 13 outputs, to the acquisition section 14, the device name input from the detection section 12 in cases in which device control logic 34 corresponding to the device name input from the detection section 12 is not present in the terminal 10.

The acquisition section 14 acquires the driver 32 and the device control logic 34 corresponding to the device name input from the determination section 13. As an example, the driver 32 and the device control logic 34 are prepared in the cloud server 30 for each device name in advance, and the acquisition section 14 acquires the driver 32 and the device control logic 34 corresponding to the device name from the cloud server 30.

The acquisition section 14 stores the acquired device control logic 34 in the device control logic list DB 22 in association with the device name. Further, the acquisition section 14 stores the acquired driver 32 in the driver DB 24 and stores information (driver correspondence information) associating the device name with the driver 32 in the driver DB 24.

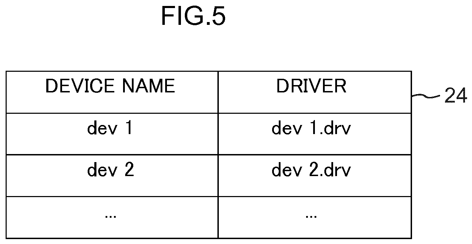

Fig. 5 is a diagram illustrating an example of a data structure of the driver DB 24. The device name and the driver 32 are associated in the driver DB 24 along the row direction, and, for example, it is indicated that a driver "dev1.drv" corresponds to a device name "dev 1" in the example illustrated in Fig. 5.

The acquisition section 14 outputs, to the determination section 13, a notification informing, for example, acquisition completion, after the driver 32 and the device control logic 34 corresponding to the device name input from the determination section 13 have been acquired.

After the determination section 13 has received the notification from the acquisition section 14, the determination section 13 outputs, to the identification section 15, the device name input from the detection section 12.

The identification section 15 references the device control logic list DB 22 and acquires the device control logic 34 corresponding to the device name input from the determination section 13. The identification section 15 then reads code of the application 17 loaded to the memory 104 and determines whether or not code the same as the tag of the device control logic 34 is included in the application 17.

In cases in which the same code as the tag of the device control logic 34 is included in the application 17, the identification section 15 identifies the line number of the line that includes that same code as the tag in the application 17. When doing so, the identification section 15 references the driver correspondence information, and enables the acquired driver 32 to be utilized from the application 17 by acquiring, from the driver DB 24, the driver 32 corresponding to the device name input from the determination section 13 and loading the acquired driver 32 to the memory 104.

The identification section 15 then outputs, to the insertion section 16, the identified line number and the logic of the device control logic 34 corresponding to the device name input from the determination section 13.

The insertion section 16 inserts the logic received from the identification section 15 into the application 17 loaded to the memory 104, at the next line after the line number received from the identification section 15. After inserting logic into the application 17, the insertion section 16 outputs a notification to the execution unit 11 instructing the application to be re-read.

After the execution unit 11 receives the notification from the insertion section 16, the execution unit 11 re-reads the application 17 after insertion of the logic, loaded to the memory 104, and executes the application 17.

On the other hand, the cloud server 30 includes the driver 32 and the device control logic 34 corresponding to the device name. The cloud server 30 manages links of the driver 32 and device control logic 34 to the device name, and after the device name has been received from the terminal 10, the driver 32 and the device control logic 34 corresponding to the received device name are transmitted to the terminal 10.

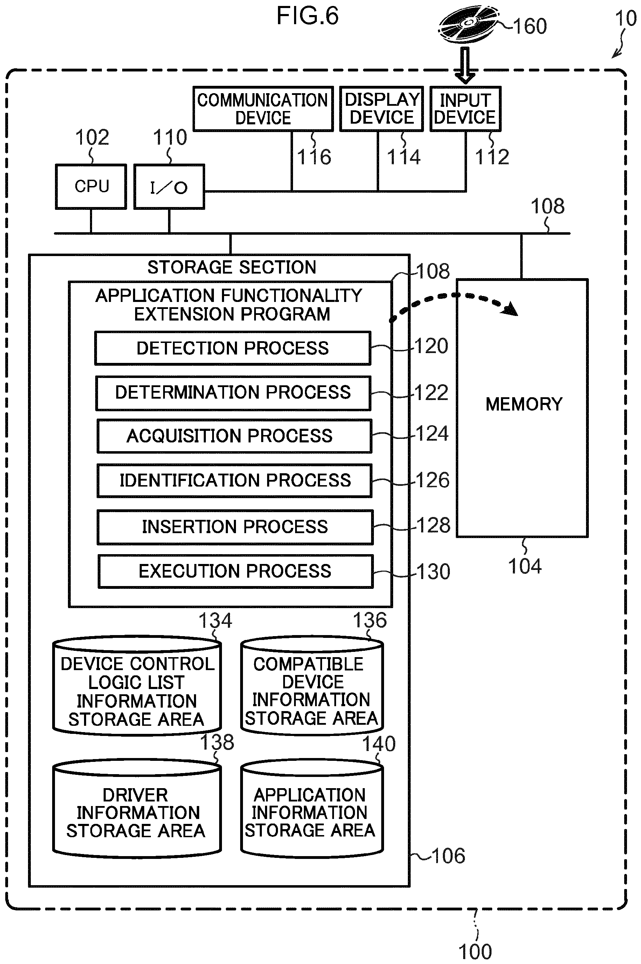

Next, Fig. 6 illustrates a configuration diagram in a case in which the terminal 10 is implemented by a computer.

A computer 100 includes a CPU 102, the memory 104, and a non-volatile storage section 106. The CPU 102, the memory 104, and the non-volatile storage section 106 are connected to one another via a bus 108. The computer 100 further includes an input/output (I/O) section 110 that connects the computer 100 to other apparatuses to enable data exchange with the other apparatuses. The I/O section 110 is connected to the bus 108. Further, the I/O section 110 is connected to, for example, an input device 112, a display device 114, and a communication device 116.

The input device 112, for example, includes an interface device to enable the user to give instructions to the computer 100, such as a touch panel installed on the display screen of the display device 114. The input device 112 further includes, for example, a reading device for reading data stored on a recording medium 160 such as a CD-ROM or flash memory. The display device 114 includes, for example, a display device that displays processing results produced by the computer 100. Further, the communication device 116 includes an interface for connecting to the device 40 and the communication line 50, and the communication device 116 exchanges data with the device 40 and other electronic equipment such as the cloud server 30. Note that the storage section 106 may be implemented by a hard disk drive (HDD), flash memory, or the like.

An application functionality extending program 118 that causes the computer 100 to function as the terminal 10 illustrated in Fig. 1 is stored in the storage section 106. The application functionality extending program 118 stored in the storage section 106 includes, for example, a detection process 120, a determination process 122, an acquisition process 124, an identification process 126, an insertion process 128, and an execution process 130.

The CPU 102 reads the application functionality extending program 118 from the storage section 106, loads the application functionality extending program 118 to the memory 104, and executes each process included in the application functionality extending program 118.

The computer 100 operates as the terminal 10 illustrated in Fig. 1 as a result of the CPU 102 reading the application functionality extending program 118 from the storage section 106, loading the application functionality extending program 118 onto the memory 104, and executing the application functionality extending program 118. The computer 100 also operates as the detection section 12 illustrated in Fig. 1 as a result of the CPU 102 executing the detection process 120. The computer 100 also operates as the determination section 13 illustrated in Fig. 1 as a result of the CPU 102 executing the determination process 122. The computer 100 also operates as the acquisition section 14 illustrated in Fig. 1 as a result of the CPU 102 executing the acquisition process 124. The computer 100 also operates as the identification section 15 illustrated in Fig. 1 as a result of the CPU 102 executing the identification process 126. The computer 100 also operates as the insertion section 16 illustrated in Fig. 1 as a result of the CPU 102 executing the insertion process 128. The computer 100 also operates as the execution unit 11 illustrated in Fig. 1 as a result of the CPU 102 executing the execution process 130.

Further, a device control logic list information storage area 134, a compatible device information storage area 136, a driver information storage area 138, and an application information storage area 140 are stored in the storage section 106.

The device control logic list DB 22 is generated in the memory 104 as a result of the CPU 102 loading to the memory 104 information stored in the device control logic list information storage area 134 that forms logic correspondence information. Further, the compatible device DB 20 is generated in the memory 104 as a result of the CPU 102 loading to the memory 104 information stored in the compatible device information storage area 136 that forms compatible device information. Further, the driver DB 24 is generated in the memory 104 as a result of the CPU 102 loading to the memory 104 information stored in the driver information storage area 138 that forms the driver 32 and driver correspondence information. Further, a state in which the application 17 is able to be executed by the CPU 102 is adopted as a result of the CPU 102 loading to the memory 104 information stored in the application information storage area 140 that forms the application 17.

Note that the computer 100 may, for example, be implemented by a semiconductor integrated circuit, and more specifically, may be implemented by an application specific integrated circuit (ASIC) or the like.

Next, operation of the first exemplary embodiment is described. The terminal 10 according to the first exemplary embodiment executes application functionality extension processing after, for example, a user of the terminal 10 instructs the terminal 10 to execute an application 17 designated using the input device 112 and the designated application 17 is loaded to the memory 104 and executed.

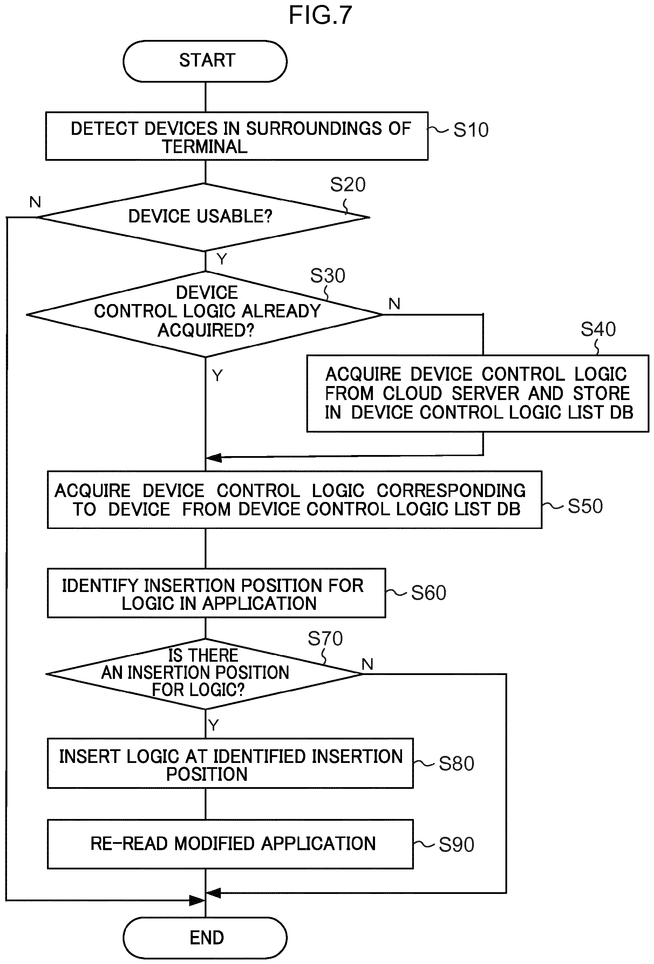

Fig. 7 is a flowchart illustrating an example of a flow of the application functionality extension processing executed by the terminal 10 according to the first exemplary embodiment.

First, at step S10, the detection section 12 detects a device 40 capable of connecting to the terminal 10 via the communication device 116. Known technology may be employed in the procedure for detecting devices 40 capable of connecting to the terminal 10 via the communication device 116.

For example, in cases in which a wireless LAN is included in the communication device 116, the detection section 12 connects the terminal 10 to a wireless access point and acquires the device names of devices 40 capable of connecting to the terminal 10 by scanning information related to the device 40 connected to the wireless access point. Note that when the detection section 12 scans the information related to the devices 40, the detection section 12 may, for example, acquire the device names that is able to connect to the terminal 10 using a known connection protocol such as universal plug and play (UPnP) or DLNA®. Further, instead of device names, identification information enabling the device 40 to be identified, such as an SSID, may be acquired, and the device name may be identified from the SSID.

Further, in cases in which Bluetooth (registered trademark) is included in the communication device 116, device names that is able to connect to the terminal 10 are acquired using Bluetooth pairing modes. Other than these, the detection section 12 may acquire device names that is able to connect to the terminal 10 using short range wireless communications such as near field communication (NFC) or using a radio frequency identifier (RFID). Note that in the description hereafter, the detection section 12 acquires a single device name of a device 40 that is able to connect to the terminal 10 using a known device detection procedure, for convenience of the description.

At step S20, the detection section 12 determines whether or not the device 40 represented by the device name acquired in the processing at step S10 is usable by the terminal 10. More specifically, the detection section 12 determines that the device detected by the processing of step S10 is usable by the terminal 10 in cases in which the device name acquired in the processing of step S10 is included in the compatible device information stored in the compatible device DB 20 loaded onto the memory 104. However, the detection section 12 determines that the device 40 detected by the processing of step S10 is not usable by the terminal 10 in cases in which the device name acquired by the processing of step S10 is not included in the compatible device information.

In cases in which negative determination is made by the determination processing of step S20, the application functionality extension processing ends since no devices 40 that are usable by the terminal 10 are present, and the terminal 10 executes the application 17 designated by the user without the terminal 10 coordinating with a device 40. However, in cases in which affirmative determination has been made in the determination processing of step S20, processing transitions to step S30. At this time, the detection section 12 stores the device name acquired by the processing of step S10 in a predetermined area of the memory 104.

At step S30, the determination section 13 acquires the device name acquired by the processing of step S10 from the memory 104. The determination section 13 then determines whether or not the acquired device name is included in the device name column of the device control logic list DB 22 by referencing the device control logic list DB 22 illustrated in Fig. 4.

In the case of an affirmative determination, the terminal 10 causes processing to transition to step S50 since the driver 32 and the device control logic 34 corresponding to the acquired device name have already been acquired. However, in the case of a negative determination, the terminal 10 causes processing to transition to step S40 since the driver 32 and the device control logic 34 corresponding to the acquired device name are not present.

At step S40, the acquisition section 14 acquires the device name acquired by the processing of step S10 from the memory 104. The acquisition section 14 then transmits the acquired device name to the cloud server 30 and acquires the driver 32 and the device control logic 34 corresponding to the transmitted device name from the cloud server 30.

Note that the first exemplary embodiment describes an example in which the driver 32 and the device control logic 34 are disposed in the cloud server 30, which is connected to the communication line 50 such as an internet line. However, the driver 32 and the device control logic 34 may be disposed on a server having no connection to an internet line (a local server), or may be disposed in the device 40 itself.

In cases in which the driver 32 and the device control logic 34 have been disposed in the cloud server 30, access is possible from any terminal 10 as long as the terminal 10 is capable of connecting to an internet line. Accordingly, the accessibilities of the driver 32 and the device control logic 34 are increased compared to cases in which the driver 32 and the device control logic 34 are disposed in information equipment other than the cloud server 30.

Further, in cases in which the driver 32 and the device control logic 34 have been disposed in a local server, the scope of access permissions to the driver 32 and the device control logic 34 may be limited to terminals 10 within the local network that the local server is connected to. Accordingly, the concealability of the driver 32 and the device control logic 34 is increased compared to cases in which the driver 32 and the device control logic 34 are disposed on other information equipment other than a local server.

Further, in cases in which the driver 32 and the device control logic 34 have been disposed in the device 40, the cloud server 30 and the local server are unneeded. Accordingly, the number of information equipment required to acquire the driver 32 and the device control logic 34 may be reduced compared to cases in which the driver 32 and the device control logic 34 have been disposed on other information equipment other than the device 40.

The acquisition section 14 stores the acquired device control logic 34 in the device control logic list DB 22 in association with the acquired device name. Furthermore, the acquisition section 14 stores the acquired driver 32 in the driver DB 24 and adds the acquired driver 32 to the driver correspondence information of the driver DB 24 illustrated in Fig. 5 in association with the device name.

At step S50, the identification section 15 acquires the device name acquired by the processing of step S10 from the memory 104. The identification section 15 then references the device control logic list DB 22 and acquires the device control logic 34 corresponding to the acquired device name from the row data in which the acquired device name is set in the device name column of the device control logic list DB 22.

At step S60, the identification section 15 identifies the insertion position for the logic in the application 17 loaded to the memory 104. More specifically, the identification section 15 reads the code of the application 17 loaded onto the memory 104 and identifies, as the insertion position for the logic, the line number of a line in the application 17 including code that is the same as the tag of the acquired device control logic 34. Note that in cases in which plural instances of code that is the same as the tag of the acquired device control logic 34 are included in the application 17, the identification section 15 identifies the line number of each line that includes the code as insertion positions for the logic.

At step S70, the identification section 15 determines whether or not there is at least one or more logic insertion position identified by the processing of step S60. In the case of a negative determination, there is no position in the application 17 loaded in the memory 104 to insert the logic included in the device control logic 34 acquired by the processing of step S50. Accordingly, the application functionality extension processing ends, and the application 17 designated by the user is executed without the terminal 10 coordinating with the device 40.

However, in the case of an affirmative determination, processing transitions to step S80. At this time, the identification section 15 stores the logic included in the device control logic 34 acquired by the processing of step S50 and the line number of the application 17 acquired by the processing of step S60 in a predetermined area of the memory 104. Further, the identification section 15 references the driver correspondence information of the driver DB 24, and enables the acquired driver 32 to be utilized from the application 17 by acquiring the driver 32 corresponding to the acquired device name from the driver DB 24 and loading the acquired driver 32 to the memory 104. Obviously, timing for loading the driver to the memory 104 is not limited to the timing of the processing of step S70.

At step S80, the insertion section 16 acquires, from the memory 104, the logic and the line number of the application 17 that have been stored in the case of affirmative determination made in the determination processing of step S70. The insertion section 16 then inserts the acquired logic at a position of the application 17 loaded onto the memory 104 at or subsequent to the line represented by the acquired line number. Note that the insertion of logic into the application 17 during execution may be implemented using, for example, the document object model (DOM), which is an application programming interface (API) enabling access to the application 17 loaded to the memory 104.

At step S90, the execution unit 11 re-reads, from the memory 104, the application 17 into which the logic has been inserted by the processing of step S80, and executes the application 17.

As described above, the application functionality extension processing illustrated in Fig. 7 automatically inserts the logic of the device 40 detected by the terminal 10 into the application 17 during execution, without operation by the user, enabling the device 40 to be utilized from the application 17.

Note that the logic and the tag corresponding to the device 40 are included in the device control logic 34 and managed in unison as an example in the first exemplary embodiment; however, configuration may be made such that the logic and the tag are managed separately as long as an association is made between the logic and the tag. For example, configuration may be made such that the logic is included in the device control logic 34 and the tag corresponding to the logic is managed using a DB, not illustrated in the drawings.

Further, as an example in the first exemplary embodiment, description has been given of acquiring single device name of a device 40 that is capable of connecting to the terminal 10 in the processing of step S10. In cases in which plural device names have been acquired in the processing of step S10, the processing of steps S20 to S90 may be executed for each device name included in the plural acquired device names.

Further, as an example in the first exemplary embodiment, the devices 40 that is capable of connecting to the terminal 10 are detected in the processing of step S10 after the application 17 designated by the user of the terminal 10 is loaded to the memory 104 and executed. However, the devices 40 that is capable of connecting to the terminal 10 may be detected periodically after starting the terminal 10. In such cases, since detection of the devices 40 completes prior to executing the application 17, the time taken for the devices 40 to become usable from the application 17 may be shortened compared to cases in which the device 40s are detected after executing the application 17.

However, in cases in which the devices 40 that is capable of connecting to the terminal 10 are detected periodically, the number of times that the devices 40 are detected increases such that the power consumption of the terminal 10 increases compared to cases in which the devices 40 are detected together with execution of the application 17. Accordingly, the devices 40 are preferably detected together with the execution of the application 17 from the view point of power consumption reduction of the terminal 10.

Further, as an example in the first exemplary embodiment, the device control logic 34 acquired from the cloud server 30 is stored in the terminal 10, and the device control logic 34 stored in the terminal 10 is utilized in cases in which device control logic corresponding to the detected devices 40 is present in the terminal 10. However, configuration may be made such that the device control logic 34 is acquired from the cloud server 30 each time a device is detected by the terminal 10, without storing the device control logic 34 in the terminal 10.

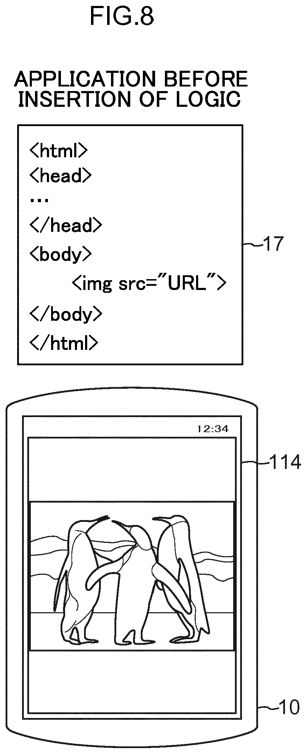

Fig. 8 is a diagram illustrating the terminal 10 prior to inserting the logic of the device 40 detected by the terminal 10 into an application 17 that displays an image, which has been loaded into the memory 104. Note that the application 17 given as an example in Fig. 8 includes an img tag represented by "<img src="URL">". The img tag is a command to display the image of an image file designated by the 'src="URL"' on the display device 114 of the terminal 10.

In cases in which the terminal 10 has executed the application 17 given as an example in Fig. 8, the image of an image file designated by 'src="URL"' is displayed on the display device 114 of the terminal 10. However, logic to coordinate with the printer, which is an example of the device 40, and to output the image to the printer is not included in the application 17 given as an example in Fig. 8.

However, the printer is detected as a device 40 that is usable by the terminal 10 by, for example, executing the application functionality extension processing illustrated in Fig. 7. In cases in which the img tag is included in the tag of the device control logic 34 corresponding to the detected printer, the terminal 10 inserts the logic for outputting the image to the printer immediately after the line of the img tag of the application 17.

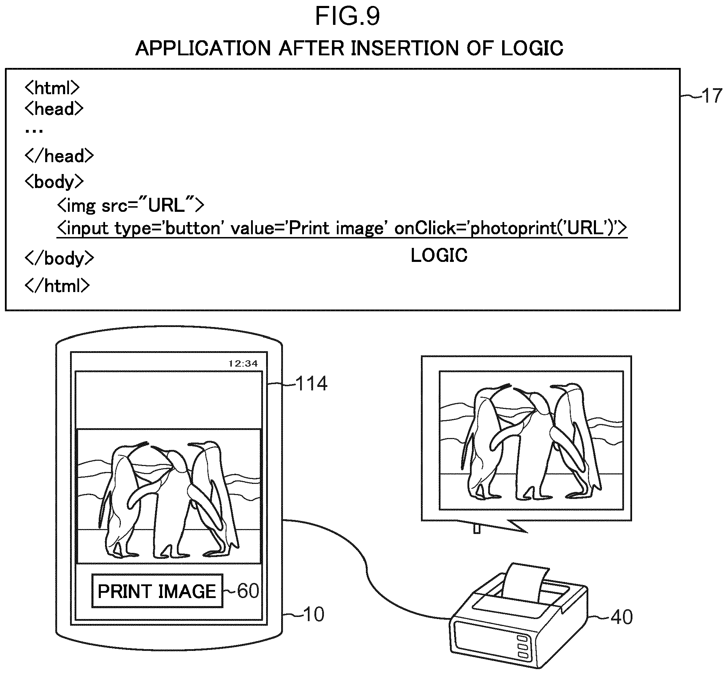

Fig. 9 is a diagram illustrating the terminal 10 after the application functionality extension processing illustrated in Fig. 7 has been executed and the logic of the device 40 (the printer in this case) detected by the terminal 10 has been inserted into the application 17 illustrated in Fig. 8, which has been loaded to the memory 104.

Note that the logic inserted into the application 17 in the example given in Fig. 9, for example, includes a command to display a button 60 labeled "print image" on the display device 114 of the terminal 10. In cases in which the user of the terminal 10 has pressed the button 60, a photoprint function included in the driver 32 corresponding to the detected printer is called, and the image of the image file designated as "URL" by the img tag is output to the device 40.

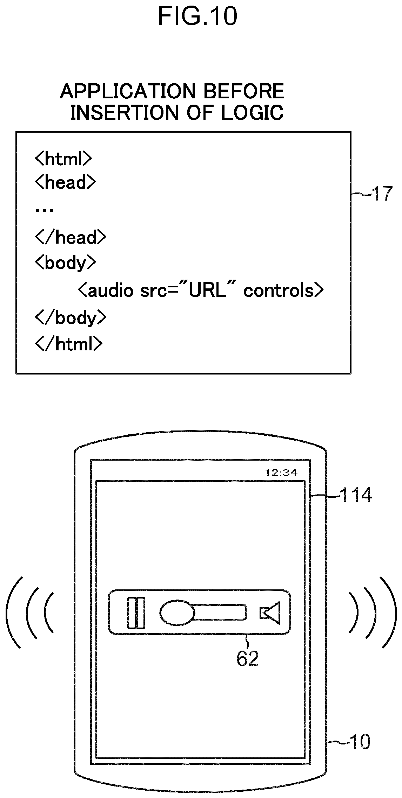

Further, Fig. 10 is a diagram illustrating the terminal 10 prior to inserting the logic of the device 40 detected by the terminal 10 into an application 17 that outputs audio, which has been loaded into the memory 104. Note that the application 17 given as an example in Fig. 10 includes an audio tag represented by "<audio src="URL" controls>". The audio tag is a command to output audio of an audio file designated by 'src="URL"' from an audio output device, not illustrated, installed in the terminal 10. Further, "controls" of the audio tag is a command to display, on the display device 114 of the terminal 10, an operation item 62 for temporary pausing and designating the playback position of the audio, for example.

In cases in which the application 17 given as an example in Fig. 10 has been executed, the terminal 10 displays the operation item 62 on the display device 114 of the terminal 10 and outputs audio of the audio file designated by 'src="URL"' from the audio output device, not illustrated, installed in the terminal 10. However, the logic for coordinating with an external speaker, which is an example of the device 40, and outputting the audio from the external speaker is not included in the application 17 given as an example in Fig. 10.

However, the device 40 is, for example, detected as an external speaker that is usable by the terminal 10 by executing the application functionality extension processing illustrated in Fig. 7. In cases in which an audio tag is included in the tag of the device control logic 34 corresponding to the detected external speaker, the terminal 10 inserts logic for outputting the audio to the external speaker into the line immediately after the audio tag of the application 17.

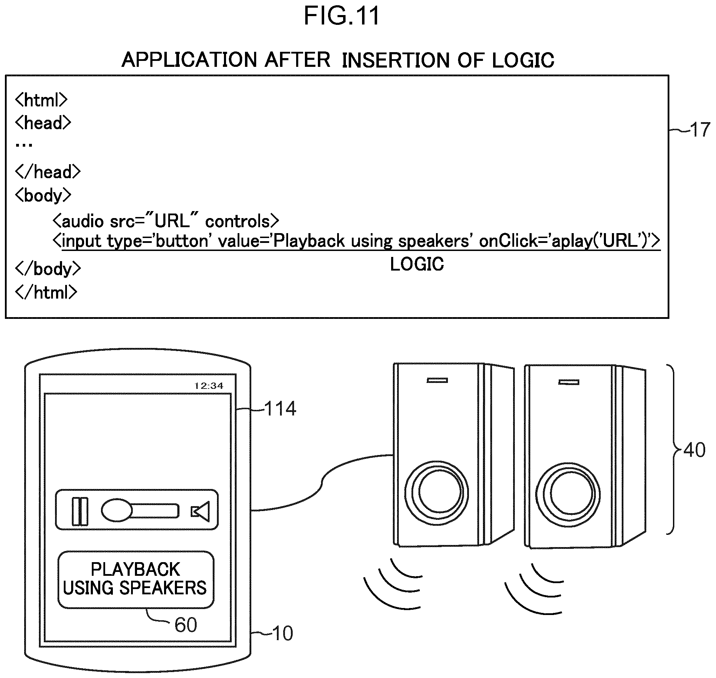

Fig. 11 is a diagram illustrating the terminal 10 after the application functionality extension processing illustrated in Fig. 7 has been executed and the logic of the device 40 (the external speaker in this case) detected by the terminal 10 has been inserted into the application 17 illustrated in Fig. 10 loaded to the memory 104.

Note that the logic inserted into the application 17 given as an example in Fig. 11 includes a command to, for example, display the button 60 labeled "playback using speaker" on the display device 114 of the terminal 10. In cases in which the user of the terminal 10 has pressed the button 60, an aplay function included in the driver 32 corresponding to the detected external speaker is called, and the audio of the audio file designated as "URL" by the audio tag is output from the external speaker, which is the device 40.

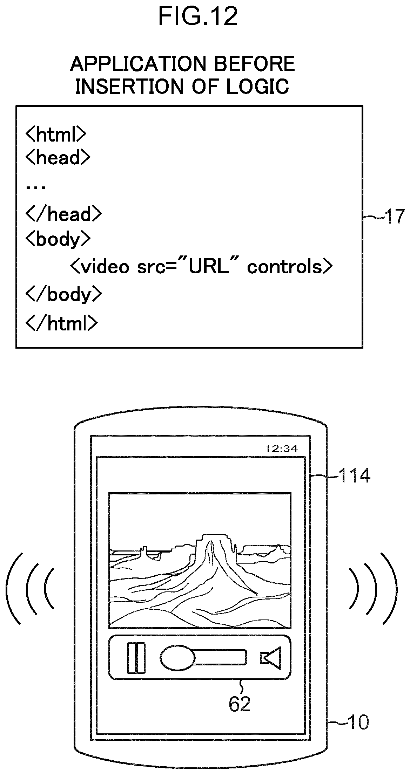

Further, Fig. 12 is a diagram illustrating the terminal 10 prior to inserting the logic of the device 40 detected by the terminal 10 into an application 17 that displays videos, which has been loaded into the memory 104. Note that the application 17 given as an example in Fig. 12 includes a video tag represented by '<video src="URL" controls>'. The video tag is a command to output audio included in a video file designated by 'src="URL"' from an audio output device, not illustrated, installed in the terminal 10, and to display a video image included in the video file on the display device 114 of the terminal 10. Further, "controls" of the video tag is a command to, for example, display an operation item 62 for temporary pausing of the video and designating the playback position as already described.

In cases in which the terminal 10 has executed the application 17 given as an example in Fig. 12, the video image of the video file designated by 'src="URL"' and the operation item 62 are displayed on the display device 114 of the terminal 10. Further, audio of the video file designated by 'src="URL"' is output from the audio output device, not illustrated, installed in the terminal 10.

However, the application 17 given as an example in Fig. 12 does not include logic for coordinating with an external monitor, which is an example of the device 40, and outputting the video image from the external monitor.

However, the terminal 10, for example, detects the external monitor as a device 40 that is usable by the terminal 10 by executing the application functionality extension processing illustrated in Fig. 7. In cases in which a video tag is included in the tag of the device control logic 34 corresponding to the detected external monitor, the terminal 10 inserts the logic for outputting the video to the external monitor into the line immediately after the video tag of the application 17.

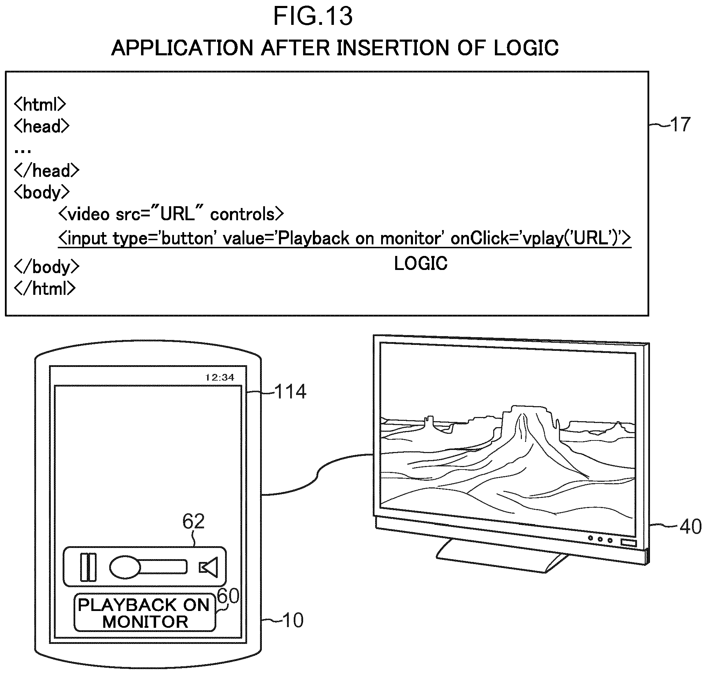

Fig. 13 is a diagram illustrating the terminal 10 after the application functionality extension processing illustrated in Fig. 7 has been executed and the logic of the device 40 (the external monitor in this case) detected by the terminal 10 has been inserted into the application 17 illustrated in Fig. 12 loaded into the memory 104.

Note that the logic inserted into the application 17 given as an example in Fig. 13 includes, for example, a command to display a button 60 labeled "playback on monitor" on the display device 114 of the terminal 10. In cases in which the user of the terminal 10 has pressed the button 60, a vplay function included in the driver 32 corresponding to the detected external monitor is called and the video image of the video file designated as "URL" by the video tag is output to the external monitor, which is the device 40.

Note that in the examples of coordination between the application 17 and the device 40 illustrated in Fig. 9, Fig. 11, and Fig. 13, the application 17 displays a button 60, which receives an instruction to begin coordination between the application 17 and the device 40, on the display device 114. The application 17 then begins coordination between the application 17 and the device 40 at the time at which the button 60 has been pressed by the user of the terminal 10. However, display of the button 60 is not necessary. For example, configuration may be made such that the application 17 automatically begins coordination between the application 17 and the device 40 without waiting for an instruction from the user of the terminal 10.

In the application functionality extension processing illustrated in Fig. 7, the logic of the device 40 that is usable by the terminal 10 detected by the detection section 12 is automatically inserted into the application 17 in this manner, enabling the application 17 to coordinate with the device 40 such as a printer.

However, amongst applications 17, there are also, for example, applications 17 that handle confidential information. In an application 17 that handles confidential information, there may be circumstances in which, for example, outputting confidential information from the application 17 to the printer is undesirable, in order to prevent confidential information from being taken outside.

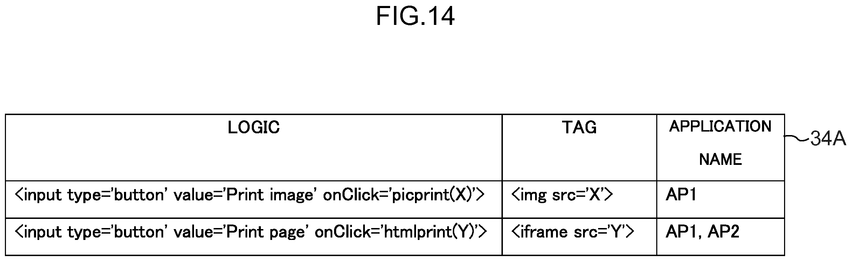

In such cases, for example, employing device control logic 34A illustrated in Fig. 14 instead of the device control logic 34 illustrated in Fig. 3 may serve as a solution.

The device control logic 34A includes logic correspondence information that, in addition to the logic and tag corresponding to the device 40, also associates application names of the applications 17 compatible with the device 40. The application name of the device control logic 34A lists application names for which insertion of the corresponding logic is permitted.

In the processing of step S60 of Fig. 7, the identification section 15 first determines whether or not the application name of the acquired device control logic 34A matches the application name of the application 17 during execution by the execution unit 11. Then, in cases of an affirmative determination, the identification section 15 continues by transitioning to the processing of step S60, already described. However, the identification section 15 ends the application functionality extension processing illustrated in Fig. 7 in cases of a negative determination, without identifying the insertion position of the logic.

As a result of the above processing, logic for the device 40 corresponding to the device control logic 34A is inserted into only the applications 17 that are listed in the application name column of the device control logic 34A. The terminal 10 may accordingly designate devices 40 that may be coordinated with per application 17.

Note that application names for which insertion of the corresponding logic is forbidden may be listed in the application names of the device control logic 34A illustrated in Fig. 14. In such cases, the application functionality extension processing illustrated in Fig. 7 may be configured to end without the identification section 15 identifying the insertion position for the logic in cases in which the application name of the acquired device control logic 34A matches the application name of the currently executing application 17.

Further, the application 17 is, for example, downloaded from information equipment connected to the communication line 50, and is executed by the terminal 10. In this regard, a domain of the information equipment, which is the acquisition source for the application 17, and a domain of the cloud server 30 that includes the device control logic 34 defining the logic to be inserted into the acquired application 17 may be different. Note that the domain is address information on the communication line 50, uniquely allocated for identifying the information equipment.

In such cases, logic of the device control logic 34 will be inserted into the application 17 acquired from a different domain. However, operations that acquire the device control logic 34 from a domain that is different from the domain of the information equipment serving as the acquisition source of the application 17 are known as cross-site requests, and these are often forbidden in the execution unit 11. This is because there is a possibility that the administrators of the application 17 and the device control logic 34 are different in cases in which the domains of the acquisition sources for the application 17 and the device control logic 34 are different. There is accordingly a possibility that malicious logic, such as redirection to an illicit site, is described by the device control logic 34 provided by a source other than the administrator of the application 17, and the execution unit 11 therefore forbids the acquisition of the device control logic 34 in view of security.

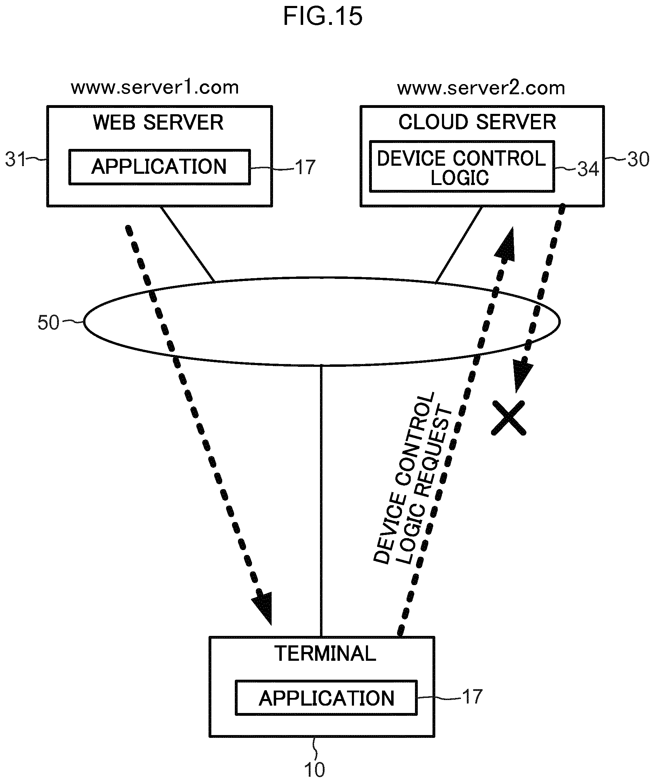

Fig. 15 is a diagram illustrating an example of a cross-site request. As illustrated in Fig. 15, the terminal 10, for example, acquires the application 17 from a web server 31 represented by the domain "www.server1.com". The application functionality extension processing illustrated in Fig. 7 is then executed by the terminal 10, and, for example, an attempt is made to acquire the device control logic 34 from the cloud server 30 represented by the domain "www.server2.com". However, the execution unit 11 may reject the acquisition of the device control logic 34 in view of security, as already described.

Cross-origin resource sharing (CORS), for example, is known as a mechanism for avoiding such cross-site requests. Creating a CORS association, for example, between the terminal 10 and the cloud server 30 therefore enables the device control logic 34 to be acquired from the cloud server 30.

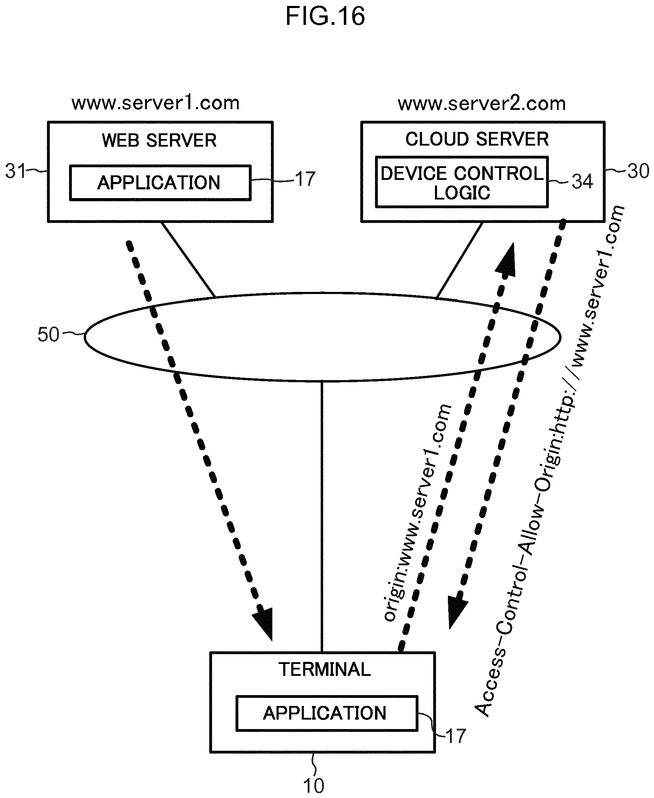

Fig. 16 is a diagram illustrating an example of a cross-site request with CORS applied. In cases in which device control logic 34 from a domain that differs from the acquisition source of the application 17 is acquired, the acquisition section 14 transmits the domain (www.server1.com) of the acquisition source of the application 17 to the cloud server 30, appended to an origin header. The cloud server 30 appends, to an Access-Control-Allow-Origin header of the electronic text included in the device control logic 34, the domain that has been appended to the origin header and that is the acquisition source of the application 17. The cloud server 30 then transmits, to the terminal 10, the electronic text that includes the device control logic 34 set with the Access-Control-Allow-Origin header. In the terminal 10, the execution unit 11 permits the acquisition section 14 to acquire the device control logic in cases in which the Access-Control-Allow-Origin header includes a domain that is the same as the domain appended to the origin header.

As described above, when the application 17 is executed by the terminal 10, the application functionality extension processing illustrated in Fig. 7 is executed in combination therewith, thereby enabling insertion of logic corresponding to the device 40 into the application 17, which has not take coordination with the device 40 into consideration. Accordingly, the device 40 may be utilized even in cases in which the application 17 has not taken coordination with the device 40 into consideration.

Furthermore, the application functionality extension processing inserts logic into the application 17 loaded to the memory 104, such that the code of the application 17 itself stored in the storage section 106 is not overwritten.

### Second Exemplary Embodiment

The application functionality extension processing according to the first exemplary embodiment automatically inserts logic for devices 40 that have been detected by the terminal 10 and that is capable of coordinating with the application 17, into the application 17 without operation by the user. Accordingly, even in cases in which the user has already decided the device 40 that they wish to use, the logic for all of the devices 40 that are capable of coordinating with the application 17 are inserted into the application 17, and the application 17 may coordinate with unnecessary devices 40.

Therefore, in the second exemplary embodiment, description is given of application functionality extension processing in which the user selects the device 40 that they wish to use and the application 17 coordinates with the device 40 selected by the user. Note that configuration of the web system and configuration of the computer that implements the terminal 10 in the second exemplary embodiment are the same as the configuration of the web system 1 (Fig. 1) and the configuration of the computer (Fig. 6) in the first exemplary embodiment.

Next, operation of the second exemplary embodiment is described. The terminal 10 according to the second exemplary embodiment executes the application functionality extension processing at the same timing as in the case of the first exemplary embodiment.

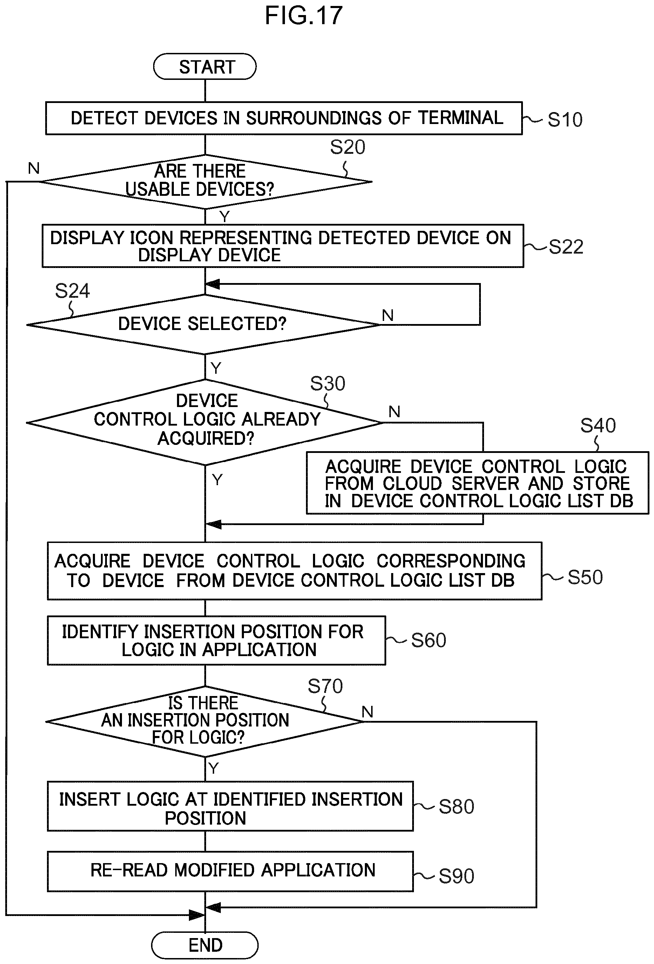

Fig. 17 is a flowchart illustrating an example of a flow of application functionality extension processing executed by the terminal 10 according to the second exemplary embodiment. The flowchart illustrated in Fig. 17 differs from the flowchart of the application functionality extension processing of first exemplary embodiment illustrated in Fig. 7 in that the processing of step S22 and step S24 has been added.

At step S22, the detection section 12 displays, on the display device 114, an icon associated with the device 40 that has been determined to be usable by the terminal 10 by the determination processing of step S20.

At step S24, the detection section 12 determines whether or not an icon has been selected by the user of the terminal 10, and the processing of step S24 is repeated until affirmative determination is made, namely, until an icon has been selected. After an icon has been selected by the user of the terminal 10, the detection section 12 stores the device name of the device 40 corresponding to the icon selected by the user of the terminal 10 in a predetermined area in the memory 104. Processing then transitions to step S30.

Thereafter, the execution of the processing of step S30 to step S90, which has been already described, enables only the device 40 selected by the user to be utilized from the application 17.

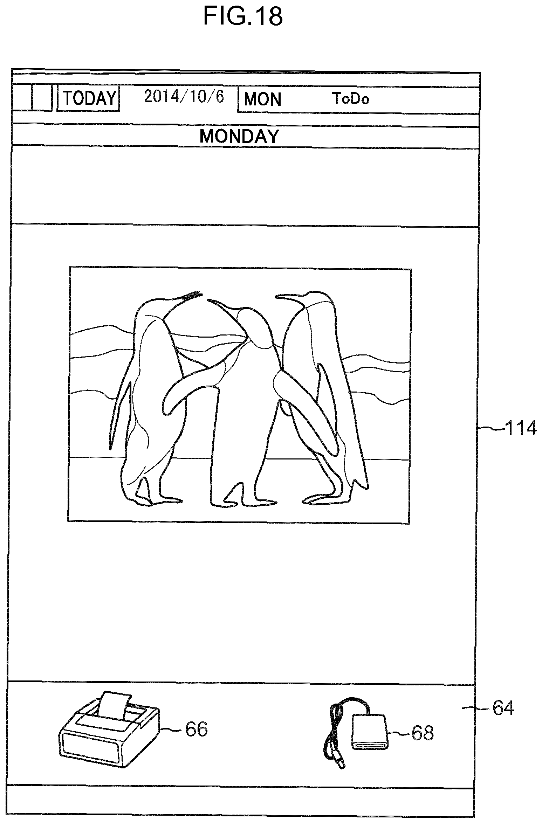

Fig. 18 is a diagram illustrating an example screen displayed on the display device 114 of the terminal 10 in cases in which the processing of step S22 has been executed. The processing of step S22, for example, causes the icons corresponding to the devices 40 that are usable by the terminal 10 to be displayed in an area 64, which is in a lower position in the display device 114.

The icons employ, for example, a schematic sketch of the exterior or the like of the corresponding device 40; however, text, a combination of a sketch and text, or the like may be employed as long as the format allows the corresponding device 40 to be uniquely represented. Note that in the example of Fig. 18, for example, an icon 66 indicating a printer and an icon 68 indicating a storage device are displayed. Further, the position of the area 64 is merely an example and, obviously, the icons may be disposed in any position of the display device 114.

In cases in which the user has, for example, selected the icon 66 from the icons displayed on the area 64, coordination between the currently executing application 17 and the printer indicated by the icon 66 is enabled.

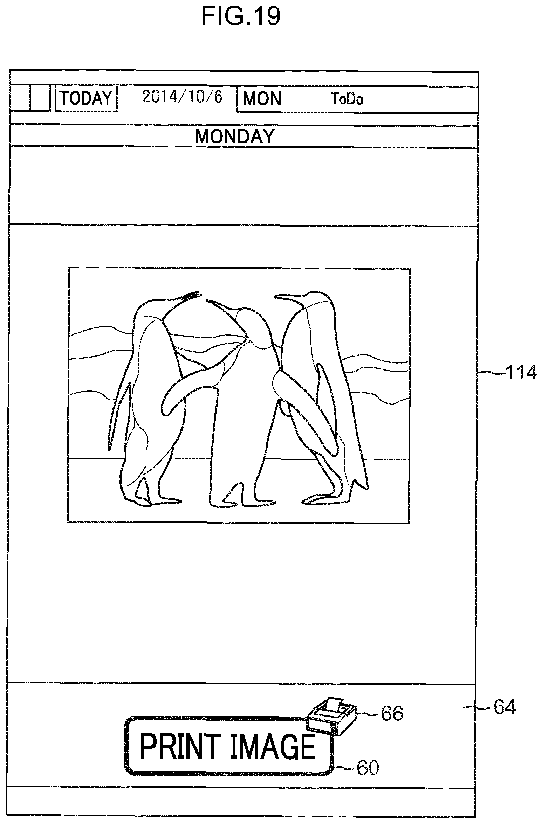

Fig. 19 is a diagram illustrating an example screen displayed on the display device 114 of the terminal 10 after selection of the icon 66.

For example, a button 60 that instructs output of an image to the printer is displayed in the area 64 in cases in which a command to display a button 60 is included in the logic of the device control logic 34 corresponding to the printer represented by the icon 66. At this time, the icon selected by the user (the icon 66 in this case) may also be displayed in addition to the button 60, as illustrated in Fig. 19. Displaying the icon selected by the user enables the user to be notified of what device 40 has been coordinated with the application 17, in contrast with cases in which the icon is not displayed.

The application functionality extension processing according to the second exemplary embodiment thus provides a user interface displaying a listing of devices 40 usable by the terminal 10, and enables the user to select the device 40 that they wish to use.

### Third Exemplary Embodiment

The application functionality extension processing of Fig. 7 and Fig. 17 according to the first exemplary embodiment and the second exemplary embodiment described an example in which known technology that employed the communication device 116 at step S10 to detect the devices 40 capable of connecting to the terminal 10. However, the third exemplary embodiment describes an example in which an imaging device such as a camera is employed to detect the devices 40 capable of connecting to the terminal 10.

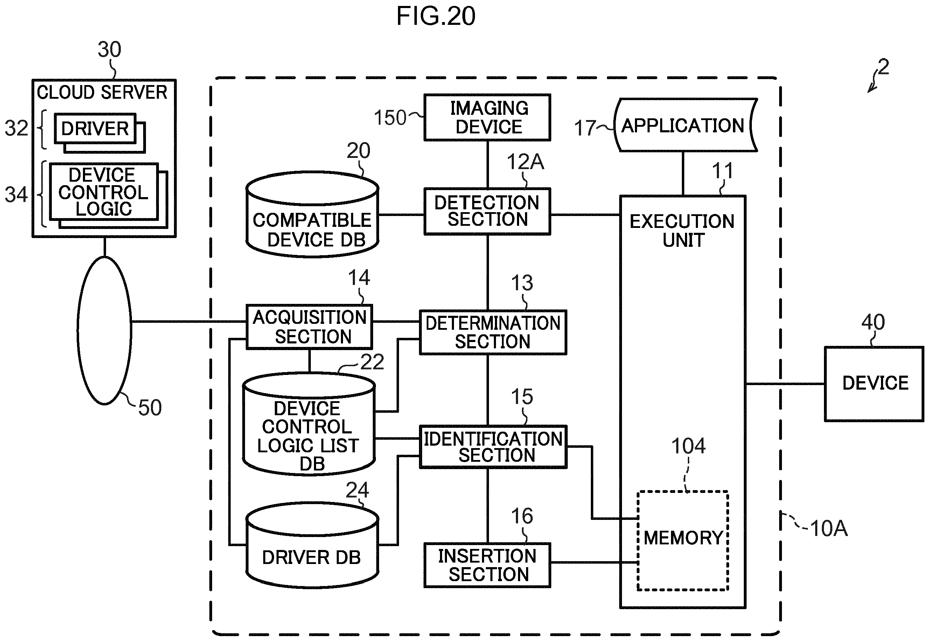

Fig. 20 is a diagram illustrating an example of a configuration of a web system according to the third exemplary embodiment. A web system 2 illustrated in Fig. 20 differs from the web system 1 illustrated in Fig. 1 in that an imaging device 150 is newly added, and the detection section 12 has been replaced by a detection section 12A.

Accompanying execution of the application 17 in the execution unit 11, the detection section 12A causes the imaging device 150 to capture an image of the surroundings of a terminal 10A. The detection section 12A detects devices 40 included in the captured image, references the compatible device DB 20, and detects whether or not detected devices 40 are usable by the terminal 10. In cases in which a device 40 is usable, the detection section 12A then outputs the detected device name of the device 40 to the determination section 13.

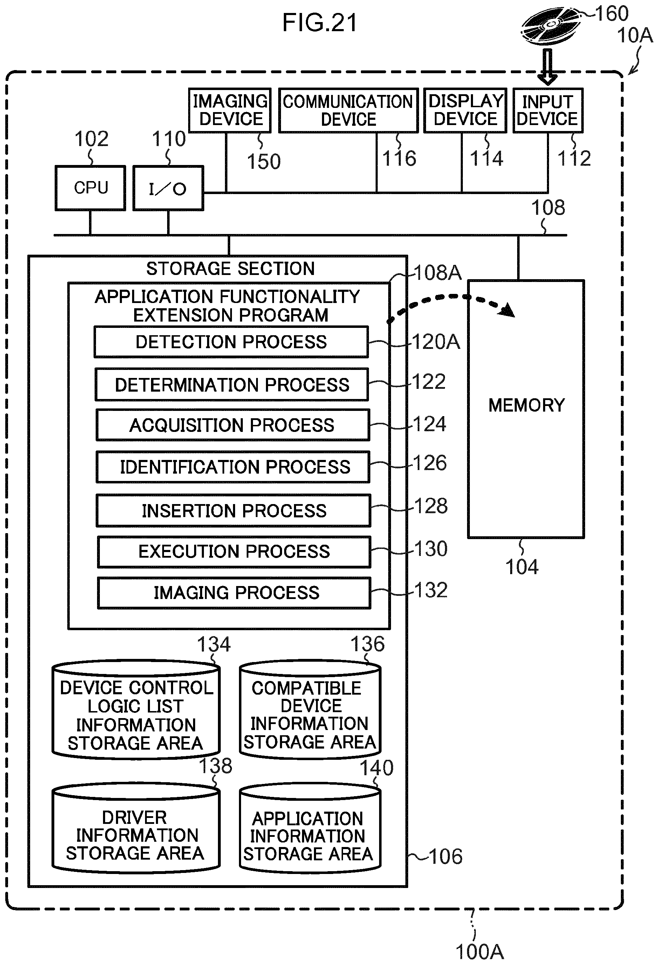

Next, Fig. 21 illustrates a configuration example in cases in which the terminal 10A according to the third exemplary embodiment is implemented by a computer. The configuration example of a computer 100A illustrated in Fig. 21 differs from the configuration example of the computer 100 illustrated in Fig. 6 in that the imaging device 150 is newly connected to the I/O section 110 and the detection process 120 has been replaced by a detection process 120A. Note that accompanying replacement with the detection process 120A, the application functionality extending program 118 is replaced by an application functionality extension program 118A.

The imaging device 150 is a device having functionality to capture an image and convert the captured image into image data. Specifically, a camera is employed as the imaging device 150, for example. Further, the computer 100A operates as the detection section 12A illustrated in Fig. 20 as a result of the CPU 102 executing the detection process 120A.

Note that the computer 100A may be implemented by, for example, a semiconductor integrated circuit, and more specifically, by an ASIC or the like.

Next, operation of the third exemplary embodiment is described. The timing at which the terminal 10A according to the third exemplary embodiment executes the application functionality extension processing is the same as in the first exemplary embodiment and the second exemplary embodiment. Namely, the terminal 10A executes the application functionality extension processing after, for example, the user of the terminal 10A instructs the terminal 10A to execute the application 17 designated by the input device 112 and the designated application 17 is being executed loaded to the memory 104.

Note that for execution of the application functionality extension processing according to the third exemplary embodiment, identification information for identifying the device 40, for example, a label labeled with a text string representing the device name, is affixed to the device 40 in advance at a position that is visible from outside. Note that instead of the text string, the label may be labeled with a barcode or the like representing the device name.

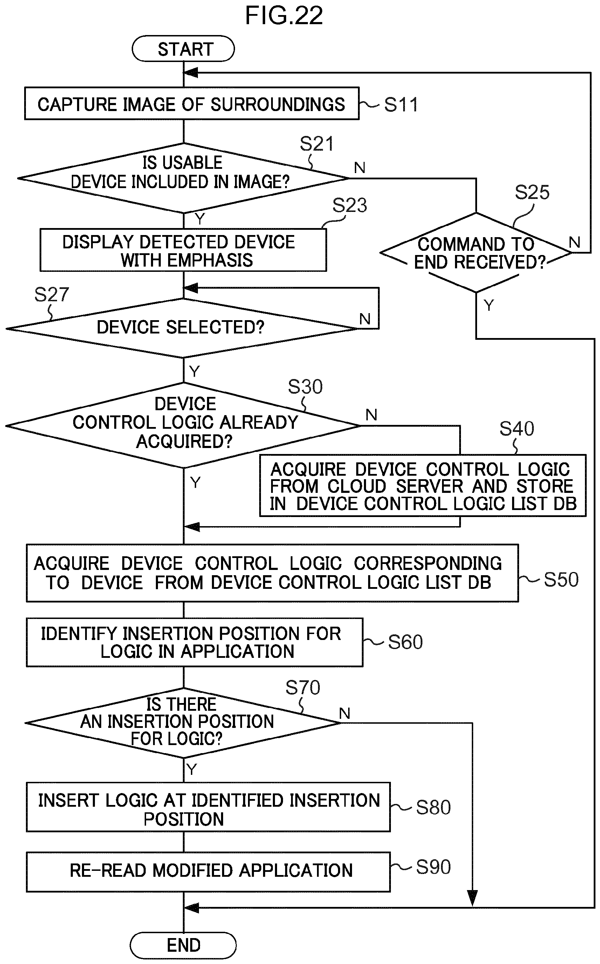

Fig. 22 is a flowchart illustrating an example of a flow of application functionality extension processing executed by the terminal 10A according to the third exemplary embodiment. The flowchart illustrated in Fig. 22 differs from the flowchart of the first exemplary embodiment illustrated in Fig. 7 in that the processing of steps S10 and S20 are replaced by steps S11 and S21 respectively, and the processing of steps S23, S25, and S27 have been newly added.

First, at step S11, the detection section 12A acquires an image (a captured image) of the surroundings of the terminal 10A captured by the imaging device 150. In cases in which labels labeled with device names are included in the captured image, the detection section 12A then reads the device names from the labels using known character recognition technology and detects the devices 40 included in the captured image.

At step S21, the detection section 12A determines whether or not the device 40 included in the captured image detected by the processing of step S11 is a device 40 that is usable by the terminal 10A. The determination method may make determination by referencing the compatible device DB 20, as already described in the processing of step S20 of Fig. 7. Processing transitions to step S25 in cases in which the determination processing of step S21 is negative determination.

At step S25, the detection section 12A determines whether or not, for example, an end instruction for image capture has been notified from the input device 112. Then, in cases of affirmative determination, the application functionality extension processing illustrated in Fig. 22 ends, or in cases of negative determination, processing transitions to step S11 and the detection section 12A repeats the processing to detect the devices 40 included in the captured image.

On the other hand, processing transitions to step S23 in cases in which the determination processing of step S21 makes an affirmative determination. At step S23, the detection section 12A, for example, displays detected devices 40 with emphasis to indicate to the user where each detected device 40 is present in the captured image displayed on the display device 114. Here, methods in which, for example, the device 40 is indicated by an arrow or the like, the device 40 is enclosed by a frame, or the color of the device 40 is changed are considered as methods for displaying the device 40 with emphasis.

At step S27, the detection section 12A determines whether or not a device 40 included in the captured image has been selected by the user. The determination may be made by the detection section 12A acquiring operation information notified from a touch panel, which is one input device 112 installed on the surface of the display device 114, as a result of, for example, the user pressing a device 40 displayed on the display device 114 using their finger. Namely, in cases in which the detection section 12A has acquired operation information from the touch panel, processing transitions to step S30, or in cases in which operation information has not been acquired, the processing of step S27 is repeated and selection of a detected device 40 is awaited.

Thereafter, the application 17 being executed may utilize the device 40 selected from the captured image by the user by executing the processing of steps S30 to S90.

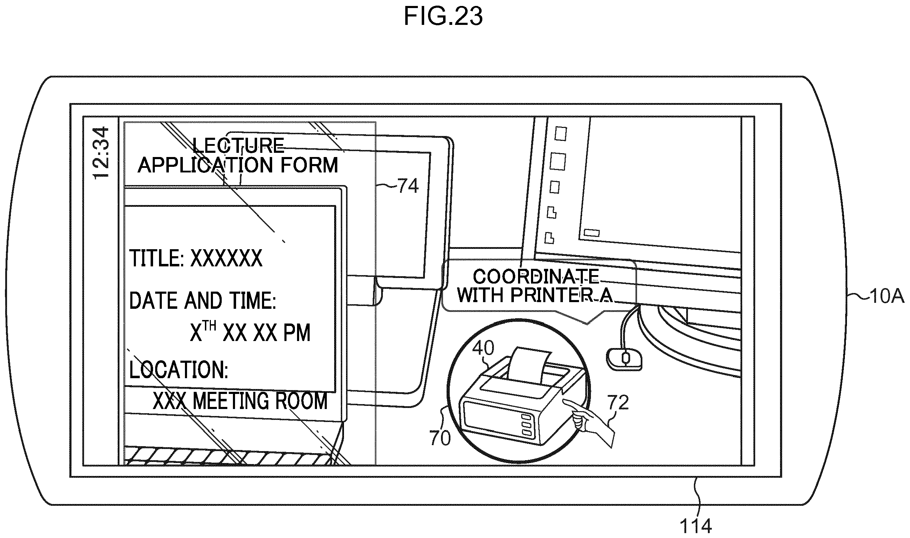

Fig. 23 is a diagram illustrating an example of displaying a captured image in cases in which a device 40 that is usable by the terminal 10A has been detected.

The captured image is displayed on the display device 114 of the terminal 10A, and in the example of Fig. 23, the devices 40 detected by the application functionality extension processing are displayed with emphasis, and, for example, an icon 72 displaying a frame 70 surrounding the device 40 and pointing out the device 40 is displayed.

Furthermore, configuration may be made such that, for example, a bubble labeled "coordination with printer A" is displayed and the device name to be coordinated with the application 17 is displayed on the display device 114.

Further, an application image 74 displayed by the executing application 17 is also displayed on the display device 114. In such cases, as illustrated in Fig. 23, the application image 74 is preferably displayed semi-transparently in the period in which the captured image is being display on the display device 114, so that the user may easily confirm the detected devices 40.

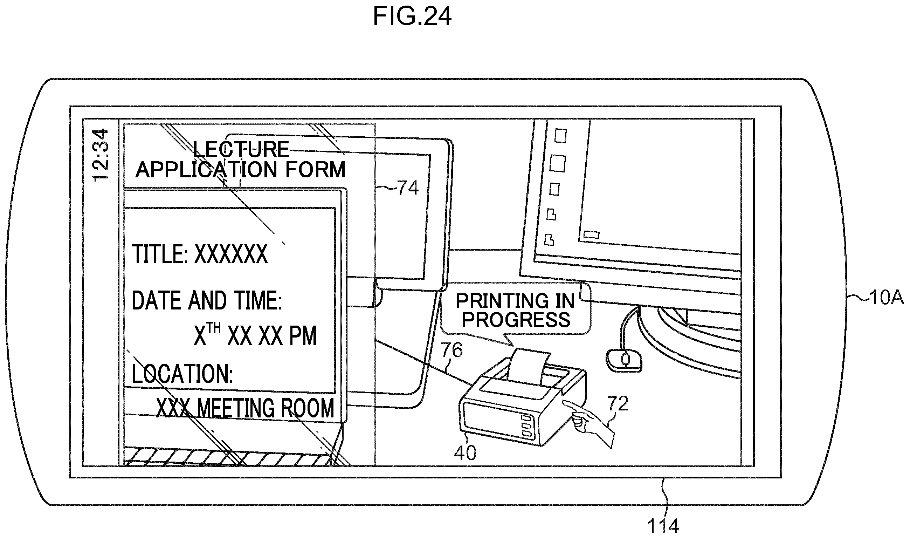

Fig. 24 is a diagram illustrating an example of display in a case in which the user has selected the device 40 to be coordinated with the application 17.

In cases in which the user has selected the device 40 to be coordinates with the application 17, the association between the application image 74 of the application 17 and the device 40 to be coordinates is preferably displayed so as to be easy to understand. In the example of Fig. 24, for example, the application image 74 and the device 40 to be coordinated are displayed on the display device 114 associated by a line 76. Then, after the user presses down on a location of the display device 114 where the device 40 is being display, for example, a bubble labeled with "Printing in progress" is displayed on the display device 114 and the printing results are output from the device 40 (in this case, a printer).

The application functionality extension processing according to the third exemplary embodiment thus enables the user to select the device 40 to be coordinates with the application 17 while looking at an actual image of the device 40 using augmented reality (AR) technology using a captured image. Accordingly, the operability related to coordination between the application 17 and the device 40 may be increased compared to cases in which, for example, the device 40 to be coordinates with the application 17 is selected from a listing of device names.

Although technology disclosed herein has been described with reference to the exemplary embodiments, technology disclosed herein is not limited to the scope described by these exemplary embodiments. Various changes or improvements may additionally be made to each exemplary embodiment within a range not departing from the spirit of technology disclosed herein, and modes in which these changes or improvements have been added are also included in the technological scope of technology disclosed herein. For example, the sequence of processing may be changed within a scope that does not depart form the spirit of technology disclosed herein.

Although a mode in which the application functionality extension program is pre-stored (installed) in a storage section has been described in each exemplary embodiment, there is no limitation thereto. The application functionality extension program according to technology disclosed herein may also be provided in a mode stored to the computer readable recording medium 160. For example, the application functionality extension program according to technology disclosed herein may also be provided in a mode stored to a portable recording medium such as a CD-ROM, DVD-ROM, USB memory, or the like. Further, the application functionality extension program according to technology disclosed herein may also be provided in a mode stored in, for example, semiconductor memory such as flash memory.

Further, modes in which the logic of the device detected by the terminal 10 is inserted into the executing application 17 have been described in the exemplary embodiments. However, logic of the device detected by the terminal 10 may be inserted into the application 17 while in a state of, for example, loaded to the memory 104 and awaiting execution.

Note that suggestions for the application functionality extension processing of the first exemplary embodiment may also be applied to the application functionality extension processing of the second exemplary embodiment and the third exemplary embodiment.

## Claims

1. An application functionality extension method comprising:
identifying, by a computer installed in a terminal, a position where a predetermined tag corresponding to a device detected by the terminal is included from an application included in the terminal; and
inserting, by the computer, logic for utilizing the device corresponding to the predetermined tag at the identified position of the application.

2. The application functionality extension method of claim 1, wherein the application is an application being executed by the terminal.

3. The application functionality extension method of claim 1 or claim 2, wherein the position where the predetermined tag corresponding to the device is included is identified from the application in cases in which usage of the device has been permitted for the application in advance.

4. The application functionality extension method of any one of claim 1 to claim 3, further comprising:
displaying an identification image associated with the device on a display device included in the terminal; and
identifying a position where the predetermined tag corresponding to the device represented by an identification image selected by the user is included from the application.

5. The application functionality extension method of any one of claim 1 to claim 4, further comprising displaying, on a display device included in the terminal, a screen item that receives an instruction to begin coordination of the application with the device.

6. The application functionality extension method of any one of claim 1 to claim 5, wherein:
the terminal includes an imaging device; and
the device is detected from an image captured by the imaging device.

7. The application functionality extension method of claim 6, further comprising displaying the detected device on a display device included in the terminal with emphasis.

8. An application functionality extension program that causes a computer installed in a terminal to execute a processing, the processing comprising:
identifying a position where a predetermined tag corresponding to a device detected by the terminal is included from an application included in the terminal; and
inserting logic for utilizing the device corresponding to the predetermined tag at the identified position of the application.

9. The application functionality extension program of claim 8, wherein the application is an application being executed by the terminal.

10. The application functionality extension program of claim 8 or claim 9, wherein the position where the predetermined tag corresponding to the device is included is identified from the application in cases in which usage of the device has been permitted for the application in advance.

11. The application functionality extension program of any one of claim 8 to claim 10, wherein the processing further comprising:
displaying an identification image associated with the device on a display device included in the terminal; and
identifying a position where the predetermined tag corresponding to the device represented by an identification image selected by the user is included from the application.

12. The application functionality extension program of any one of claim 8 to claim 11, wherein the processing further comprising displaying, on a display device included in the terminal, a screen item that receives an instruction to begin coordination of the application with the device.

13. The application functionality extension program of any one of claim 8 to claim 12, wherein:
the terminal includes an imaging device; and
the device is detected from an image captured by the imaging device.

14. The application functionality extension program of claim 13, wherein the processing further comprising displaying the detected device on a display device included in the terminal with emphasis.

15. An application functionality extension apparatus comprising:
an identification section that is configured to identify a position where a predetermined tag corresponding to a device detected by a detection section is included from an application included in a terminal; and
an insertion section that is configured to insert logic for utilizing the device corresponding to the predetermined tag at the position of the application identified by the identification section.

16. The application functionality extension device of claim 15, wherein the application is an application being executed by the terminal.

17. The application functionality extension apparatus of claim 15 or claim 16, wherein the identification section is configured to identify the position where the predetermined tag corresponding to the device is included from the application in cases in which usage of the device has been permitted for the application in advance.

18. The application functionality extension apparatus of any one of claim 15 to claim 17, wherein:
the detection section is configured to display an identification image associated with the device on a display device included in the terminal; and
the identification section is configured to identify a position where the predetermined tag corresponding to the device represented by an identification image selected by the user is included from the application.

19. The application functionality extension apparatus of any one of claim 15 to claim 18, wherein the insertion section is configured to insert logic including a command that causes display, on a display device included in the terminal, of a screen item that receives an instruction to begin coordination of the application with the device.

20. The application functionality extension apparatus of any one of claim 15 to claim 19, wherein:
the terminal includes an imaging device; and
the detection section is configured to detect the device from an image captured by the imaging device.

21. The application functionality extension apparatus of claim 20, wherein the detection section is configured to display the detected device on a display device included in the terminal with emphasis.

22. A computer readable recording medium storing an application functionality extension program that causes a computer to execute a processing, the processing comprising:
identifying a position where a predetermined tag corresponding to a device detected by a terminal is included from an application included in the terminal; and
inserting logic for utilizing the device corresponding to the predetermined tag at the identified position of the application.
